(19) Europäisches Patentamt / European Patent Office / Office européen des brevets

(11) **EP 4 060 915 B1**

(12) **EUROPEAN PATENT SPECIFICATION**

(45) Date of publication and mention of the grant of the patent:
**25.10.2023   Bulletin 2023/43**

(21) Application number: **21162719.5**

(22) Date of filing: **16.03.2021**

(51) International Patent Classification (IPC):
**H04K 3/00** $^{(2006.01)}$   **H04W 88/08** $^{(2009.01)}$

(52) Cooperative Patent Classification (CPC):
**H04K 3/224**

(54) **SIGNALLING FRAMEWORK FOR JAMMING DETECTION AND MITIGATION**

SIGNALISIERUNGSRAHMEN ZUR STÖRUNGSERKENNUNG UND -ABSCHWÄCHUNG

CADRE DE SIGNALISATION POUR LA DÉTECTION ET L'ATTÉNUATION DE BROUILLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.09.2022   Bulletin 2022/38**

(73) Proprietor: **Nokia Solutions and Networks Oy**
**02610 Espoo (FI)**

(72) Inventors:
• **Mandelli, Silvio**
 **71732 Tamm (DE)**
• **Baracca, Paolo**
 **70176 Stuttgart (DE)**
• **Chiarello, Leonardo**
 **70197 Stuttgart (DE)**

(74) Representative: **Nokia EPO representatives**
**Nokia Technologies Oy**
**Karakaari 7**
**02610 Espoo (FI)**

(56) References cited:
• **PIQUERAS JOVER ROGER: "Security attacks against the availability of LTE mobility networks: Overview and research directions", 2013 16TH INTERNATIONAL SYMPOSIUM ON WIRELESS PERSONAL MULTIMEDIA COMMUNICATIONS (WPMC), NICT, 24 June 2013 (2013-06-24), pages 1-9, XP032493968, ISSN: 1347-6890 [retrieved on 2013-10-02]**
• **PIDS: "5G report to be checked for LI", ETSI DRAFT; LI(17)R41001R1, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. TC - LI - Lawful Interception 30 August 2017 (2017-08-30), pages 1-605, XP014298841, Retrieved from the Internet: URL:docbox.etsi.org\LI\LI\05-CONTRIBUTIONS \2017\LI(17)R41001r1_5G_report_to_be_check ed_for_LI_\33899-130.docx [retrieved on 2017-08-30]**

## Description

Field of the invention

The present disclosure relates to detection and mitigation of jamming.

Abbreviations

| 3GPP | 3rd Generation Partnership Project |
|------|------|
| 4G / 5G / 6G | 4th / 5th 16th Generation |
| ACK | Acknowledgment |
| CC | Central Controller |
| CcCJD | CC-CU Jamming Detection Report |
| CCJD | CU-CU Jamming Detection Report |
| CDJD | CU-DU Jamming Detection Report |
| CSP | Customer service provider |
| CU | Central unit |
| DCJD | DU-CU Jamming Detection Report |
| DoS | Denial of Service |
| DU | Distributed unit |
| eCPRI | enhanced Common Public Radio interface |
| gNB | next generation NodeB |
| GPS | Global Positioning System |
| IIot | Industrial IoT |
| IoT | Internet of Things |
| JD | Jamming Detection |
| L2 | Layer 2 (MAC) |
| LBT | Listen-before-talk |
| LTE | Long term evolution |
| MAC | Medium Access Control |
| NACK | Non-Acknowledgment |
| NR | New radio |
| OLLA | Outer Loop Link Adaptation |
| PDCP | Packet data convergence protocol |
| PHY | Physical (layer) |
| PRB | Physical resource block |
| QAM | Quadrature Amplitude Modulation |
| RAN | Radio Access Network |
| RF | Radio frequency |
| RIC | Radio Intelligent Controller |
| RLC | Radio Link Control |
| RRC | Radio Resource control |
| RU | Radio unit |
| SotA | State of the Art |
| UE | User equipment |
| URLLC | Ultra-reliable low-latency communications |
| WiFi | Wireless Fidelity |

Background

Radio jamming by a malicious device is a type of security attack that can threaten the performance of a communication system. In detail, a jammer is a malicious device that intentionally injects interference without necessarily transmitting any information, but just with the purpose of performing a "denial of service" attack.

Regarding security, both LTE (the radio system of 4G) and NR (the radio system of 5G) have defined several security functionalities guaranteeing:

- Authentication: handled in the core network, to ensure protection to confirm UE identities;
- Privacy: handled at the PDCP layer, to ensure protection of data against eavesdropping, mainly obtained through ciphering/encryption;
- Data integrity: handled at the PDCP layer, to ensure protection against attacks that alter the data sent by a source to a destination.

The PDCP layer is located in the Radio Protocol Stack in the 5G Air interface on top of the RLC layer. PDCP provides its services to the RRC and user plane upper layers, e.g. IP at the UE or to the relay at the base station.

Although a security scheme is not implemented at the physical layer, all these mechanisms make both LTE and NR very secure mobile communications standards. On the other hand, jamming has only been considered as a rather limited threat for mobile communications systems up to LTE/NR by traditional customer service providers (CSPs), essentially because jamming just limits the network performance of the few devices around the jammer, without violating UE privacy or data integrity.

Recently, major concerns have been expressed by companies that want to deploy 5G for industrial scenarios. As an example, it might happen that a jammer, typically stationed outside a plant, is active and blocks the reception of the transmission of legitimate devices inside the plant. As the reliability and availability requirements of the industrial use cases are rather high, even moderate jamming might deteriorate the reliability and/or availability below the requirements. The factory owner can face huge economic losses if those attacks eventually succeed in pausing the production. Also, some other 5G ultra-reliable low-latency communications (URLLC) use cases (such as smart transportation, remote healthcare) may suffer severely from jamming.

Jamming differs from other sources of interference because a jammer is a malicious device that intentionally attacks the system and that may even violate the rules of the respective radio standard or of the regulation. Therefore, interference mitigation procedures defined for the respective radio standard might not help against jamming.

In relation to jamming attacks, the system should perform two different tasks:

- Detection: First, it is fundamental to detect the presence of a jammer when active. For example, one should identify a jammer as a reason for some network performance degradation. When a jammer is detected, one should characterize its activity as much as possible.

• Mitigation: After that, mitigation techniques should be applied in order to limit the consequences of the jamming. A lot of schemes for jamming mitigation exist, for example:

○ Direct sequence spread spectrum, by signal spreading and de-spreading;
○ Frequency hopping spread spectrum, by hopping carrier on the system band;
○ Beamforming, by applying weights at the antennas to steer beams in proper direction;
○ Power control, by increasing the transmit power;
○ Link adaptation, by using more robust QAM constellation sizes and coding schemes.
○ Dummy PRB transmission, by transmitting dummy packets on unused PRBs in order to hide the legitimate transmission.

Since jamming is a DoS attack in the form of RF interference, an efficient jamming detection algorithms typically has to exploit some information regarding the received power and interference that is available at the PHY layer [FI20205440, PCT/CN2020/098301].

The document PIQUERAS JOVER ROGER: "Security attacks against the availability of LTE mobility networks: Overview and research directions",2013 16TH INTERNATIONAL SYMPOSIUM ON WIRELESS PERSONAL MULTIMEDIA COMMUNICATIONS (WPMC), NICT, 24 June 2013 (2013-06-24), pages 1-9,ISSN: 1347-6890, discloses informing the core network by the radio access network that a radio communication is jammed.

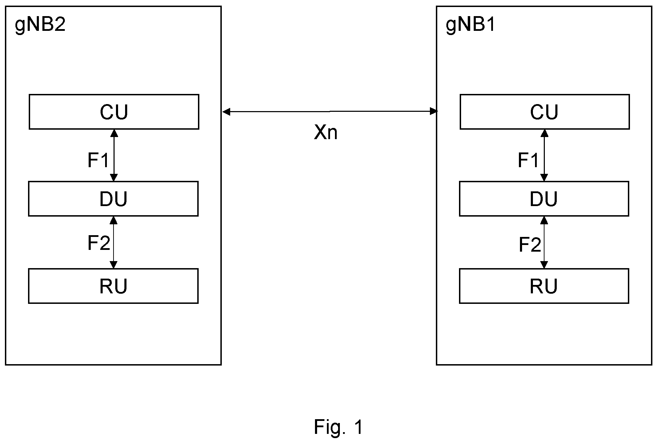

Differently from previous mobile network generations where the RAN architecture was a sort of a "monolithic block", the 5G RAN splits the base station (gNB) into the radio unit (RU), the distributed unit (DU), and the central unit (CU), which exchange information on different interfaces: the F2 or eCPRI interface for the RU-DU link, the F1 interface for the DU-CU link, and the CU is then connected to other gNBs by the Xn interface. This architecture is schematically shown in Fig. 1. In detail, the DU (together with the RU) provides the lower layer function(s) (e.g. PHY, (lower part of) MAC) of a radio communication, and the CU provides the higher layer function(s) on top of the lower layer function(s) provided by the DU (together with the RU). The higher layer functions of the CU at least partly control the lower layer function(s) of the DU. However, the lower layer function(s) of the DU may partly operate autonomously, i.e. without control from the higher layer functions of the CU. A CU may control plural DUs, i.e., a CU may belong to plural gNBs each comprising the CU and its respective DU.

The document PIDS: "5G report to be checked for LI",ETSI DRAFT; LI(17)R41001R1, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. TC - LI - Lawful Interception 30 August 2017 (2017-08-30), pages 1-605, Retrieved from the Internet:URL:docbox.etsi.org \LI\LI\05-CONTRIBUTIONS\2017\LI(17)R41001 r1_5G_report_to_be_checked_for_LI_ \33899-130.docx, discloses jamming detection and a radio communication function comprising a lower layer function provided by a DU and a higher layer function provided by a CU.

References

[PCT/CN2020/098301] PCT/CN2020/098301: P. Baracca, L. Galati Giordano, S. Khosravirad, T. Tao, and K. Upadhya, "Reactive jamming detection," filed on June 25th, 2020.
[FI20205440] FI2020-5440: P. Baracca and T. Wild, "Radio jamming detection", filed on April 29th, 2020.

Summary

It is an object of the present invention to improve the prior art.

According to a first aspect of the invention, there is provided an apparatus comprising: one or more processors, and memory storing instructions that, when executed by the one or more processors, cause the apparatus to perform: detecting that a radio communication of a distributed unit might be jammed with at least a predefined first jamming probability threshold; informing a higher layer function of the radio communication that the radio communication might be jammed with at least the predefined first jamming probability threshold, wherein the radio communication comprises a lower layer function and the higher layer function controlling at least partly the lower layer function, the distributed unit provides the lower layer function, and the distributed unit does not provide the higher layer function.

A central unit may provide the higher layer function.

According to a second aspect, there is provided an apparatus comprising: one or more processors, and memory storing instructions that, when executed by the one or more processors, cause the apparatus to perform:

receiving a first information that a first radio communication of a first central unit is jammed with at least a first predefined jamming probability threshold, wherein the first radio communication comprises a first lower layer function and a higher layer function controlling at least partly the first lower layer function, the first central unit provides the higher layer function, and the first central unit does not provide the first lower layer function; and
generating combined information by at least one of

• retrieving information of the higher layer function and combining the first information with the retrieved information;

- combining the first information with a received second information that a second radio communication of the first central unit is jammed with at least a second predefined jamming probability threshold, wherein the second radio communication is different from the first radio communication, the second radio communication comprises a second lower layer function and the higher layer function controlling at least partly the second lower layer function, and the central unit does not provide the second lower layer function; and

- combining the first information with a third information received from a second central unit that a third radio communication controlled by the second central unit is jammed with at least a third predefined jamming probability threshold, wherein the second central unit is different from the first central unit;

evaluating the combined information to obtain a jamming report as a result of the evaluating; and at least one of

- causing the first central unit to apply one or more jamming mitigation techniques of the higher layer function based on the jamming report;

- providing the jamming report to at least one of the first central unit, the second central unit and a third central unit different from each of the first central unit and the second central unit;

- providing the jamming report to at least one of the first lower layer function, the second lower layer function, and a third lower layer function different from each of the first lower layer function and the second lower layer function; and

- providing the jamming report to a central controller controlling the first central unit.

A distributed unit may provide the first lower layer function.

According to a third aspect of the invention, there is provided a method comprising: detecting that a radio communication of a distributed unit might be jammed with at least a predefined first jamming probability threshold; informing a higher layer function of the radio communication that the radio communication might be jammed with at least the predefined first jamming probability threshold, wherein the radio communication comprises a lower layer function and the higher layer function controlling at least partly the lower layer function, the distributed unit provides the lower layer function, and the distributed unit does not provide the higher layer function.

According to a fourth aspect of the invention, there is provided a method comprising:

receiving a first information that a first radio communication of a first central unit is jammed with at least a first predefined jamming probability threshold, wherein the first radio communication comprises a first lower layer function and a higher layer function controlling at least partly the first lower layer function, the first central unit provides the higher layer function, and the first central unit does not provide the first lower layer function; and

generating combined information by at least one of

- retrieving information of the higher layer function and combining the first information with the retrieved information;

- combining the first information with a received second information that a second radio communication of the first central unit is jammed with at least a second predefined jamming probability threshold, wherein the second radio communication is different from the first radio communication, the second radio communication comprises a second lower layer function and the higher layer function controlling at least partly the second lower layer function, and the central unit does not provide the second lower layer function; and

- combining the first information with a third information received from a second central unit that a third radio communication controlled by the second central unit is jammed with at least a third predefined jamming probability threshold, wherein the second central unit is different from the first central unit;

evaluating the combined information to obtain a jamming report as a result of the evaluating; and at least one of

- causing the first central unit to apply one or more jamming mitigation techniques of the higher layer function based on the jamming report;

- providing the jamming report to at least one of the first central unit, the second central unit and a third central unit different from each of the first central unit and the second central unit;

- providing the jamming report to at least one of the first lower layer function, the second lower layer function, and a third lower layer function different from each of the first lower layer function and the second lower layer function; and

- providing the jamming report to a central controller controlling the first central unit.

Each of the methods of the third and fourth aspects may be a method for jamming detection.

According to some embodiments of the invention, at least one of the following advantages may be achieved:

• improved detection and mitigation of jamming even in case of 5G and beyond 5G RAN architecture.

It is to be understood that any of the above modifications can be applied singly or in combination to the respective aspects to which they refer, unless they are explicitly stated as excluding alternatives.

Brief description of the drawings

Further details, features, objects, and advantages are apparent from the following detailed description of the preferred embodiments of the present invention which is to be taken in conjunction with the appended drawings, wherein:

Fig. 1 shows schematically the 5G RAN architecture;
Fig. 2 shows schematically a 5G architecture and jamming report exchange according to some example embodiments of the invention;
Fig. 3 shows a flowchart of operations related to jamming detection according to some example embodiments of the invention;
Fig. 4 shows a flowchart of communication between a CU and the corresponding DU for activating jamming detection at the DU according to some example embodiments of the invention;
Fig. 5 shows a flowchart of communication between two CUs for sharing CU-CU jamming detection report according to some example embodiments of the invention;
Fig. 6 shows a flowchart of communication between the CC and a CU for sharing of CU-CU and CC-CU jamming detection reports according to some example embodiments of the invention;
Fig. 7 shows an apparatus according to an example embodiment of the invention;
Fig. 8 shows a method according to an example embodiment of the invention;
Fig. 9 shows an apparatus according to an example embodiment of the invention;
Fig. 10 shows a method according to an example embodiment of the invention; and
Fig. 11 shows an apparatus according to an example embodiment of the invention;

Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

In the 5G RAN architecture, jamming detection can be implemented somehow everywhere: in the DU, in the CU, or somewhere else like in a master gNB (for example in private campus networks where the CU of a certain gNB can act as a sort of central controller (CC) of all the gNBs). However, because jamming introduces undesired/malicious interference, the essential PHY information for performing jamming detection is available only at the DU of a gNB, and there is no signalling that has been defined to allow:

- The DU to communicate jamming-relevant information to the CU;
- The CU to potentially forward this jamming-relevant information to the other CUs and, if that exists, to the CC;
- The unit responsible for deciding whether there is a jamming attack or not to inform about this decision the CU and DU of the gNBs affected by this attack, such that they can implement appropriate mitigation schemes. Thanks to these messages, different gNBs could collaborate to detect and mitigate jamming attacks, instead of adopting independent measures.

Conventional signalling does not allow for efficient jamming detection and mitigation procedures that include fast detection schemes relying on the baseband received symbols. In particular, a signalling allowing such jamming detection and mitigation procedures in the 5G RAN architecture has not been standardized. In fact, **neither a new signalling nor any procedure have been defined for the different units (RU, DU, CU, CC (if any)) in the 5G RAN to support and allow any** (known or novel) **jamming detection and/or mitigation algorithm that uses PHY information.** The PHY information is available in the DU and/or may be received from other gNBs.

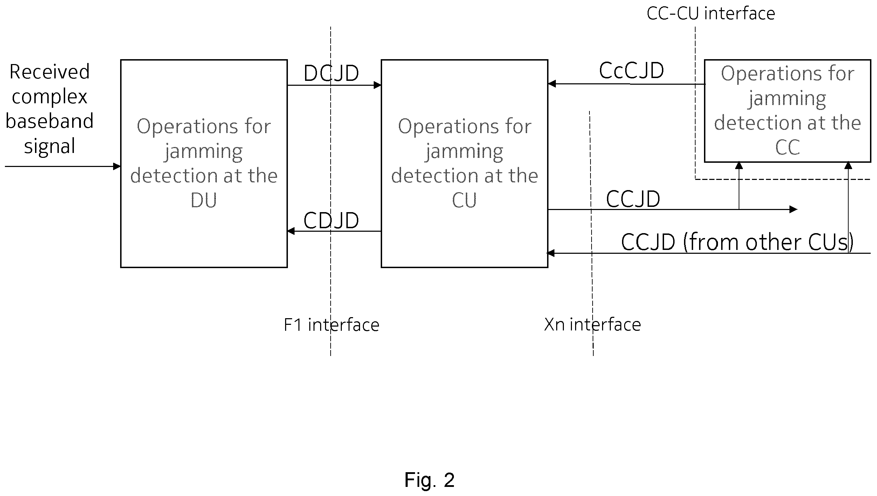

Some example embodiments of the invention provide a novel signalling and procedures to improve current 5G RAN jamming detection and, consequently, jamming mitigation. In the architectural diagram of Fig. 2, new signaling exchanged between DU and CU over the F1 interface and new signalling among CUs (and also from/to a CC, if any) over the Xn interfaces are shown. They ensure that PHY relevant information flows from the DU to the higher layers:

1. DCJD (DU-CU Jamming Detection report): This report contains the PHY information computed by the DU that can be used by the CU to: a) perform jamming detection and b) apply jamming mitigation mechanisms.
2. CCJD (CU-CU Jamming Detection report): This report contains the information elaborated by the CU based on DCJD and further information available not available at the DU (e.g. of the PDCP layer) to allow other CUs (or a CC) to: a) perform jamming detection and b) apply jamming mitigation mechanisms.

3. CcCJD (CC-CU Jamming Detection report): In case we have a CC coordinating all the gNBs and acting as a "master" for all the CUs in a "master/slave" architecture, the CC can collect the CCJD from all the coordinated CUs, fuse this information (potentially together with other available context sources of information, e.g., cameras, sensors, ...) to perform improved jamming detection: CcCJD is the output of this detection and may enable each of the CUs to apply further specific jamming mitigation mechanisms.

4. CDJD (CU-DU Jamming Detection report): This report contains the information further elaborated by the CU based on DCJD, CCJD from other CUs, and, if available, CcCJD, to enable proper implementation of jamming mitigation mechanisms in the DU.

Some example embodiments of the invention provide a procedure that allows to make use of the above-mentioned signalling to improve jamming detection in 5G RAN. **With the provided procedure, properly processed information regarding the jamming detected behaviour is transferred from and to different network elements (DU, CU, other CUs).** This allows for a faster and more sensitive jamming detection, thus mitigation, in 5G and beyond systems.

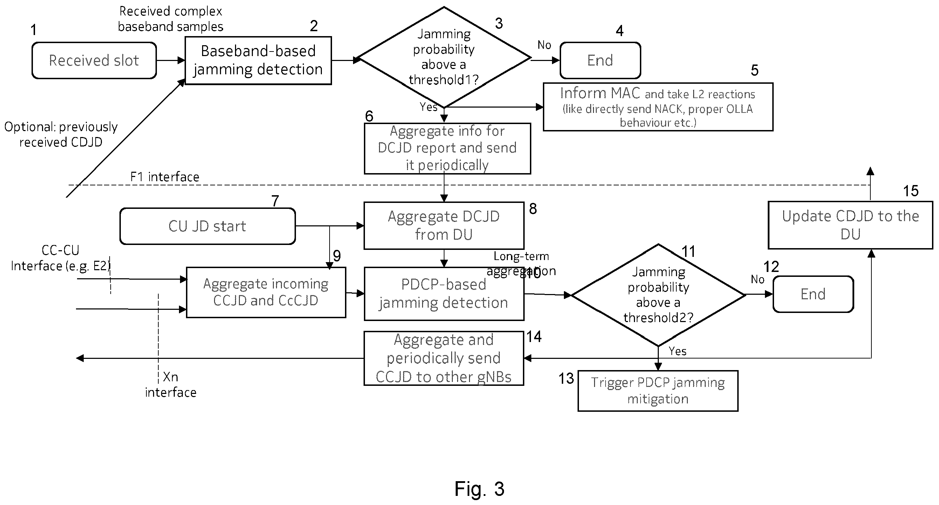

Fig. 3 shows the sequence of operation that are performed at the DU and CU of a gNB with jamming detection capabilities according to some example embodiments of the invention. Actions of the DU are shown in the top part of Fig. 3, actions of the CU are shown in the bottom part thereof, separated by the F1 interface (dashed line). The following actions are performed by DU:

1. DU receives a slot.
2. DU performs jamming detection based on the received baseband samples considering PHY algorithms, for instance by applying methods computing received power in different time, frequency or spatial resources like in [FI20205440, PCT/CN2020/098301].
3. DU decides, based on a target false alarm rate, if the jamming probability is above a predefined first threshold, wherein a false alarm indicates that jamming is detected although jamming does actually not occur.
4. If the jamming probability is not above the first threshold, the routine ends.
5. If the jamming probability is above the first threshold, DU informs its MAC layer about the detected jamming to take reactions on L2 layer. For example, MAC layer may send directly (without involvement of a higher layer) NACK to a packet received from a UE, or determine a proper OLLA behaviour.
6. In addition, if the jamming probability is above the first threshold, DU may aggregate the information on the jamming obtained by action 2 into a jamming report (DCJD). DU may send the jamming report (DCJD) periodically to CU (as shown in Fig. 3), and/or it may send DCJD event-based to CU. For example, DU may send DCJD report if the estimated jamming probability is larger than a second threshold equal to or larger than the first threshold, or if a predefined number of jamming detection events has occurred. As a still other option, DU may generate and send a DCJD report for each received slot.

CU performs the following actions:

7. Jamming detection is started at CU.
8. CU receives DCJD (typically aggregated information) from DU via F1 interface. In addition or alternatively, DU may aggregate information from several DCJD reports from the DU (long-term aggregation). Correspondingly, CU may receive one or more DCJD from other DUs.
9. CU may receive one or more CCJD from other CUs, and may receive CcCJD from CC (if any). CU may aggregate plural CCJDs and/or CcCJD.
10. Based on the aggregated information from one or more DCJDs from one or more DUs, and potentially one or more CCJDs from one or more other CUs, and potentially one or more CcCJDs from CC (if any), CU performs jamming detection based on an analysis of the PDCP-layer. For example, CU may perform jamming detection fusing the jamming probabilities reported by the DUs and CUs with some other metrics available at the PDCP layer, for instance the PDCP packet loss and delay.
11. CU decides if the jamming probability is above a predefined threshold.
12. If the jamming probability is not above the threshold, the routine ends.
13. If the jamming probability is above the threshold, CU triggers PDCP jamming mitigation techniques, for instance based on PDPC packet duplication.
14. In addition to deciding if the jamming probability is above the predefined threshold in action 11, CU may aggregate the results of one or more PDCP-based jamming detections and create a jamming report (CCJD) based thereon. It may send CCJD to other CUs via Xn interface.
15. Based on these aggregated data, CU may also update CDJD and send it to DU via F1 interface. Then, DU may take/adapt L2 mitigation actions.

Hereinafter, details are described of:

a) The operations implemented at each unit (DU, CU, and CC);
b) The content of each Jamming Detection report (DCJD, CCJD, CDJD, CcCJD).

c) The procedures and messages exchanged among the different units (DU, CU, and CC) for configuring the Jamming Detection reports (DCJD, CCJD, CcCJD, CDJD).

In the present application, the term "jamming probability" has a broad meaning. It may mean a probability in the strict sense (i.e., with values between 0 and 1), or a function of probabilities, or a function of a probability density function, like for instance a likelihood.

The false alarm rate can be set by the network administrator or owner depending on the use cases for that network. Statistical hypothesis testing can be used to perform jamming detection and different types of test can be used for that purpose, for instance: likelihood ratio test, generalized likelihood ratio (GLRT) test, Kolmogorov-Smirnov test, Shapiro-Wilk test or others. Depending on the employed test, the test statistic under the assumption that no jamming is present can be characterized, and, based on its expression, the threshold can be computed as a function of the false alarm rate. A specific example on how to compute the threshold as a function of the false alarm rate for a jamming detection scheme implemented at the DU and using GLRT is disclosed in [FI20205440]. However, the signaling and procedures proposed in this patent application can be used even if other algorithms or tests are employed.

**Operations at the DU**

In each time slot, at the resource de-mapping in the DU, the received complex baseband samples can be used to measure/estimate interference power in time, frequency, and spatial/angular domain to implement jamming detection algorithms like [FI20205440, PCT/CN2020/098301] that exploit this PHY information. If the algorithm detects the presence of a jammer, then it:

- applies specific L1/L2 jamming mitigation techniques that can be implemented already at the DU, for instance based on smart beamforming and robust link adaptation;
- creates the DCJD signalling that is sent with a time slot granularity to the CU over the F1 interface.

**DCJD signalling**

The DCJD signalling is set up and configured with an exchange of messages between the DU and the CU (see Section "CU-DU Jamming Detection Setup and Configuration" below). It contains two fields, that can be configured with different options:

- *Jamming presence* $J_{jm-pr}^{(DU)}$ .

  - Mandatory field: sent in any case if jamming is detected and CU wants to receive DCJD, even if there is no jamming detection algorithms at the CU or at the CC; note that the operator or (in the IIoT example) the factory owner can use this information just to inform the authorities.
- For this field, we can select among different options, depending mainly on the DU capabilities.

  - Time presence, containing
    - $j_{i,t}^{(DU)}$ : jamming signal detected by the DU of gNB $i$ at time slot $t$; note that $t$ can be encoded with current frame enumeration techniques used in 3GPP standards.

  - Time/Frequency presence, containing
    - $j_{i,t,f}^{(DU)}$ : jamming signal detected by the DU of gNB $i$ at time slot $t$ on sub-band $f$ with $f = 0,1, ..., F - 1$;

  - $F$ defines the number of sub-bands (with $F = 1$ we end up in just the time description), each sub-band could be 1 PRB or a set of adjacent PRBs.

- Time/Frequency/Space presence, containing -
  - $j_{i,t,f,\theta,\varphi}^{(DU)}$ : jamming signal detected by the DU of gNB $i$ at time slot $t$ on sub-band $f$ with $f = 0,1, ..., F - 1$ at azimuth direction $\theta \in \Theta$ and elevation direction $\varphi \in \Phi$.

    - $F$ defines again the number of sub-bands;
    - $\Theta = \{\theta_0, \theta_1, ..., \theta_{|\Theta|-1}\}$ is the set of considered azimuth directions (granularity can be rather coarse);
    - $\Phi = \{\varphi_0, \varphi_1, ..., \theta_{|\Phi|-1}\}$ is the set of considered azimuth directions (granularity can be rather coarse).

While these are typical combinations of parameters, DU may provide each of the parameters (time (e.g. time slot), frequency (e.g. sub-band), and space (e.g. azimuth direction and/or elevation direction)) singly or an arbitrary combination of these parameters.

The jamming presence may be calculated based on the rate of false alarms (i.e., where the DU assumes that there is jamming although actually jamming does not occur). The system determines the false alarm rate because it describes the system and how it works and its expected performance without a malicious device like a jammer and compares this expected performance with the actual performance.

- Depending on configuration or negotiation between DU and CU (see below), the jamming presence ($j_{i,t}^{(DU)}$ or $j_{i,t,f}^{(DU)}$ or $j_{i,t,f,\theta,\varphi}^{(DU)}$ in the above typical combinations) can be expressed in 2 different forms (that's why we have 6 options in total for the typical combinations):

- Soft detection value *V* (e.g., likelihood value): CU may1 compare this value with the N thresholds (computed from N false alarm rates configured in the setup phase as described in the following paragraph "CU-DU Jamming Detection Setup") in order to derive a hard detection flag; the *N* thresholds are determined for different required levels of certainty that jamming is actually present. *N* may be 1 or an integer larger than 1.
- Hard detection flag: integer value derived from the comparison between the soft detection value *V* and N thresholds $\{\tau_0, \tau_1, \tau_{N-1}\}$, that are sorted in descending order. In particular, this value is equal to *i* if $\tau_i \geq V \geq \tau_{i-1}$, with $\tau_{-1}$ and $\tau_N$ defined as the minimum and maximum value that *V* can assume, respectively. The hard detection flag may be a single bit only ("yes" or "no").

- If the CU or the CC are capable to perform a fusion of the information coming from different DUs acting as jamming detectors (using one of the many available fusion techniques, e.g., Bayesian data fusion, the Kalman filtering method, Dempster-Shafer theory (DST), etc.), then former option is recommended.

- *Interference power descriptor* $I_{int-pw}^{(DU)}$.

  - Optional field: typically, it is sent only if the CU of the gNB or the CC have jamming detection capabilities (may be predefined or negotiated in CU-DU Jamming Detection Setup and Configuration).
  - The specific content of this field depends mainly on the DU capabilities, and we can select among different options (which are aligned with $J_{jm-pr}^{(DU)}$). For the typical combinations, there are:

    - Time descriptor, containing

      - $P_{i,t}$: interference power estimated by gNB *i* at time slot *t*.

    - Time/Frequency descriptor, containing

      - $P_{i,t,f}$: interference power estimated by gNB *i* at time slot *t* on sub-band *f* with *f* = 0,1, ..., *F* - 1.

    - Time/Frequency/Space descriptor, containing

      - $P_{i,t,f,\theta,\varphi}$: interference power estimated by gNB *i* at time slot *t* on sub-band *f* with *f* = 0, 1, ... , *F* - 1 at azimuth direction $\theta \in \Theta$ and elevation direction $\varphi \in \Phi$.

### Operations at the CU

While the DU can exploit a lot of physical layer information to perform fast per-slot (or per-transport block) operations for jamming detection, the CU is supposed to aggregate high level information coming from the DU and to run more complex long-term procedures.

In particular, the CU receives the DCJD from the DU (and potentially further DUs) and can use this information plus further information available at the PDCP, including previous CCJD from other CUs and, if available, CcCJD, to refine and change the jamming detection information, either in the form of hard or soft detection, performed at the DU. If a jammer is detected at the CU, then the CU:

- applies specific jamming mitigation techniques that can be implemented at the CU, for instance exploiting PDCP packet duplication;
- creates the CCJD signalling that is sent periodically to the other CUs (or the CC) over the Xn interface;
- creates and forwards the CDJD signalling to the DU.

### CCJD signalling

The CCJD signalling is set up and configured with an exchange of messages between two CUs or between a CU and the CC (see Sections "CU-CU Jamming Detection Setup and Configuration" and "CC-CU Jamming Detection Setup and Configuration" below). Similar to DCJD, it contains two fields, that can be configured with different options:

- *Jamming presence* $J_{jm-pr}^{(CU)}$.

  - Mandatory if CU or one of its DUs detects jamming and other CU or CC wants to receive CCJD: even in case there is no jamming detection capability at the CC, this information can be used by the operator to take some measures, e.g., informing the authorities, about the presence of a jammer.
  - If the CU of gNBi has no jamming detection capability, then it just forwards the information collected from the DU, i.e., $J_{jm-pr}^{(CU)} = J_{jm-pr}^{(DU)}$.
  - If the CU has some jamming detection capabilities, for instance by exploiting the PHY information coming from the DU and some more further metrics, then this field will take different values than what has been forwarded by the DU. In that case, we can define for the CU $j_{i,t}^{(CU)}$, $j_{i,t,f}^{(CU)}$, and $j_{i,t,f,\theta,\varphi}^{(CU)}$ in a same similar way as they were defined for the DU. Also, other parameter combinations are feasible, as described above.

- *Interference power descriptor* $I_{int-pw}^{(DU)}$.

  - Optional: sent only in the case there is a centralized jamming detection algorithm running in the CC;

    • The CU just forwards this interference power descriptor received from the DU.

## Operations at the CC

The CC collects the CCJD signalling from all the CUs and performs jamming detection with potentially a better accuracy than what a single gNB can do alone. CC may use any of the jamming detection algorithms that may be used at CU, too. CC may incorporate functions such as automatic warnings to law enforcement and dashboards for system administration. A CC may exist for instance in private campus networks, where a private operator deploys few gNBs to cover a limited geographical area, and the CC can be seen as the unit that connects the network to other non-communications functions, e.g., cameras or other sensors deployed in that area. This management function may be typically implemented as a proprietary solution, running in the same virtual location of a CU and communicating with it via proprietary interfaces. However, in some example embodiments, a CC function is implemented and deployed independently from a CU, for example if a network managing function resides in the Radio Intelligent Controller (RIC), defined for Open RAN standards. In this case, the CC function residing in the RIC would communicate with the RAN - i.e. its CUs - via the E2 interface. Other options could be adopted too, thus we mention how this signal can be specified for a generic case.

The output of this algorithm is the CcCJD, which is sent back to the CUs periodically and/or event driven.

## CcCJD signalling

Differently from DCJD and CCJD, CcCJD contains just one field about the jamming detection decision.

- *Jamming presence* $J_{jm-pr}^{(CC)}$.

  - Optional: sent only if

    • There is a centralized jamming detection algorithm running at the CC;

- Typically, it is sent only if there is some jamming mitigation mechanism implemented at either the CU or at the DU (or at both levels). May be negotiated at setup and configuration or predefined.

- Similar to $J_{jm-pr}^{(DU)}$ and $J_{jm-pr}^{(CU)}$, for the typical parameter combinations, there are similar 6 options by defining $j_{i,t}^{(CC)}$, $j_{i,t,f}^{(CC)}$, and $j_{i,t,f,\theta,\varphi}^{(CC)}$. Other parameter combinations and respective $J_{jm-pr}^{(CC)}$ are feasible, too.

## CDJD signalling

The CU, after performing jamming detection can forward the output to the DU in the form of the CDJD signalling.

- *Jamming presence* $J_{jm-pr}^{(CU-updated)}$.

  - Optional: typically sent only if (may be negotiated at setup and configuration or predefined):

    • There are some jamming mitigation mechanisms implemented at the DU and
    • There is a jamming detection algorithm implemented either at the CU (such that $J_{jm-pr}^{(CU)} \neq J_{jm-pr}^{(DU)}$) or at the CC (such that $J_{jm-pr}^{(CC)} \neq J_{jm-pr}^{(CU)}$)

  - If there is a centralized jamming detection algorithm running at the CC then $J_{jm-pr}^{(CU-updated)} = J_{jm-pr}^{(CC)}$
  - If there is no centralized jamming detection algorithm running at the CC then $J_{jm-pr}^{(CU-updated)} = J_{jm-pr}^{(CU)}$

## Jamming Detection Setup and Configuration

The jamming detection signalling and operations defined in the previous paragraphs may be configured and initialized in a setup phase. Alternatively, at least some of the jamming detection signalling and operations may be predefined. Hereinafter, the procedures and messages are described that may be exchanged among the different units (DU, CU, and CC if that exists) for configuring those signalling (DCJD, CCJD, CcCJD, CDJD) and operations.

**CU-DU Jamming Detection Setup and Configuration**

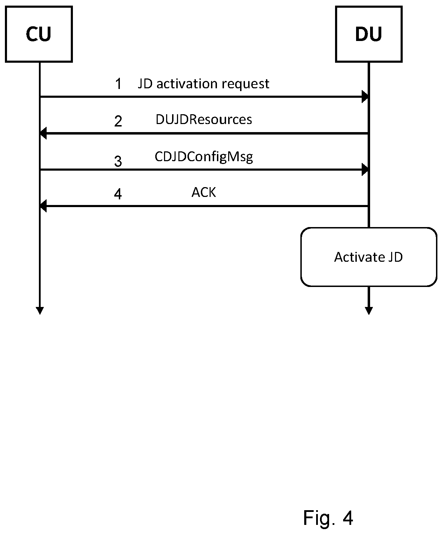

The interaction between a CU and a DU comprises a series of messages with which the CU activates and configures the jamming detection at the DU. Fig. 4 shows a flowchart of the communication between a CU and the corresponding DU for activating jamming detection. In particular:

1. The CU sends to the DU a request of activating jamming detection;
2. The DU replies with a DUJDResources message for sharing the jamming detection resources available at the DU. It may be composed of:

- Available signalling fields of the DCJD report;
- Available false alarm rates;
- Available granularities of the DCJD report (per-slot, per-transport block, or both);

3. The CU sends a CDJDConfigMsg message for selecting the desired algorithm configuration. It may be composed of:

- Configured signalling fields of the DCJD report;
- Configured false alarm rates (only if hard detection field is requested);
- Configured granularity of the DCJD report.

4. The DU typically acknowledges the CDJDConfigMsg.

After this setup, the DU starts its jamming detection routine.

**CU-CU Jamming Detection Setup and Configuration**

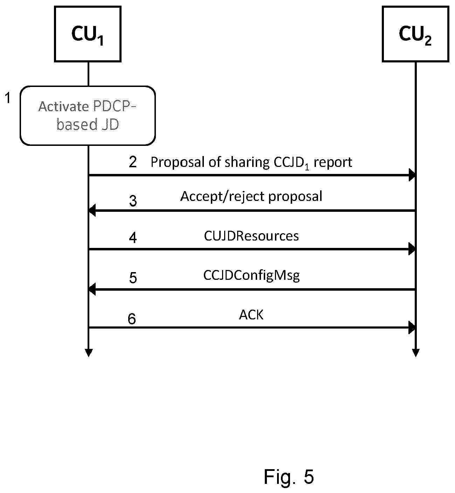

The interaction between two CUs comprises a series of messages with which one CU ($CU_1$) proposes to the other CU ($CU_2$) its jamming detection report. The latter one can accept or reject the proposal based on its jamming detection needs. Fig. 5 shows a flowchart of the communication between two CUs for sharing the CU-CU jamming detection report. In particular:

1. The $CU_1$ starts its jamming detection routine;
2. The $CU_1$ proposes to the $CU_2$ the sharing of the $CU_1$ jamming detection report;
3. The $CU_2$ replies accepting or rejecting the proposal (that may depend mainly on whether $CU_2$ has jamming detection/mitigation capabilities);
4. If proposal is accepted, the $CU_1$ sends a CU-JDResources message for sharing the jamming detection resources available at the $CU_1$. It may be composed of:

- Available signalling fields of the CCJD report;
- Available false alarm rates;

- Available periodicities of the CCJD report (time interval between two reports).

5. The $CU_2$ sends a CCJDConfigMsg message for selecting the desired algorithm configuration. It may be composed of:

- Configured signalling fields of the CCJD report;
- Configured false alarm rates (only if hard detection field is requested);
- Configured periodicity of the CCJD report.

6. The $CU_1$ typically acknowledges the CCJDConfigMsg message.

**CC-CU Jamming Detection Setup and Configuration**

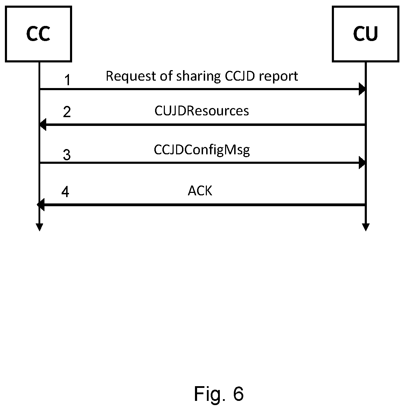

The interaction between the CC and a CU comprises a series of messages with which the CC asks the CU to share it jamming detection report, so that the CC can start its jamming detection procedures Fig. 6 shows a flowchart of the communication between the CC and a CU for sharing the CU-CU and CC-CU jamming detection reports. As mentioned before for the CcCJD message, also this configuration can be done over the E2 interface between the RIC and RAN, according to Open RAN standards. In particular:

1. The CC a) requests to the CU the sharing of the CU jamming detection report and b) proposes to the CU the sharing of the CC jamming detection report
2. The CU replies rejecting the request or accepting it by sending a CUJDResources message for sharing the jamming detection resources available at the CU. It may be composed of:

- Available signalling fields of the CCJD report;
- Available false alarm rates;
- Acceptance/Rejection of the CcCJD, with option and periodicity preferences.

3. The CC sends a CCJDConfigMsg message for selecting the desired algorithm configuration. It may be composed of:

- Configured signalling fields of the CCJD report;
- Configured false alarm rates (only if hard detection field is requested);
- Configured periodicity of the CCJD report.

4. The CU typically acknowledges the CCJDConfigMsg message.

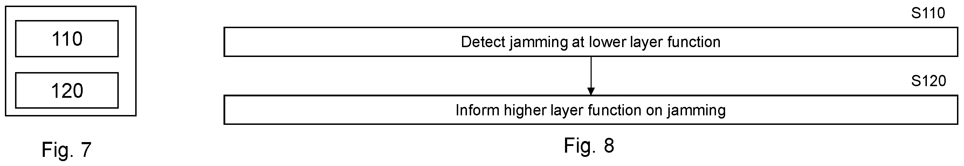

Fig. 7 shows an apparatus according to an example embodiment of the invention. The apparatus may be a distributed unit, such as a DU, or an element thereof. Fig. 8 shows a method according to an example embodiment of the invention. The apparatus according to Fig.

7 may perform the method of Fig. 8 but is not limited to this method. The method of Fig. 8 may be performed by the apparatus of Fig. 7 but is not limited to being performed by this apparatus.

The apparatus comprises means for detecting 110 and means for informing 120. The means for detecting 110 and means for informing 120 may be a detecting means and informing means, respectively. The means for detecting 110 and means for informing 120 may be a detector and informer, respectively. The means for detecting 110 and means for informing 120 may be a detecting processor and informing processor, respectively.

The means for detecting 110 detects that a radio communication of a distributed unit might be jammed with at least a predefined first jamming probability threshold (S110).

The means for informing 120 informs a higher layer function of the radio communication that the radio communication might be jammed with at least the predefined first jamming probability threshold (S120). The radio communication comprises a lower layer function and the higher layer function controlling at least partly the lower layer function, the distributed unit provides the lower layer function, and the distributed unit does not provide the higher layer function.

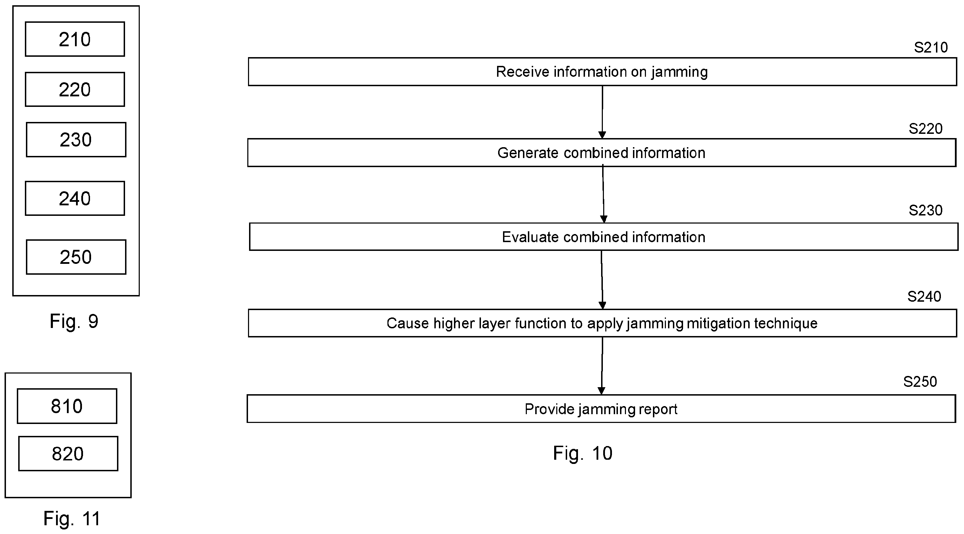

Fig. 9 shows an apparatus according to an example embodiment of the invention. The apparatus may be a central unit, such as a CU, or an element thereof, or a central controller, such as a CC, or an element thereof. Fig. 10 shows a method according to an example embodiment of the invention. The apparatus according to Fig. 9 may perform the method of Fig. 10 but is not limited to this method. The method of Fig. 10 may be performed by the apparatus of Fig. 9 but is not limited to being performed by this apparatus.

The apparatus comprises means for receiving 210, means for generating 220, means for evaluating 230, and at least one of means for causing 240 and means for providing 250. The means for receiving 210, means for generating 220, means for evaluating 230, means for causing 240 and means for providing 250 may be a receiving means, generating means, evaluating means, causing means, and providing means, respectively. The means for receiving 210, means for generating 220, means for evaluating 230, means for causing 240 and means for providing 250 may be a receiver, generator, evaluator, causer, and provider, respectively. The means for receiving 210, means for generating 220, means for evaluating 230, means for causing 240, and means for providing 250 may be a receiving processor, generating processor, evaluating processor, causing processor, and providing processor, respectively.

The means for receiving 210 receives a first information that a first radio communication of a first central unit is jammed with at least a first predefined jamming probability threshold (S210). The first radio communication comprises a first lower layer function and a higher layer function controlling at least partly the first lower layer function. The first central unit provides the higher layer function, and the first central unit does not provide the first lower layer function

The means for generating 220 generates combined information (S220). In detail, the means for generating 220 generates the combined information by at least one of

- retrieving information of the higher layer function (e.g. PDCP) and combining the first information with the retrieved information;
- combining the first information with a received second information that a second radio communication of the first central unit is jammed with at least a second predefined jamming probability threshold, wherein the second radio communication is different from the first radio communication, the second radio communication comprises a second lower layer function and the higher layer function controlling at least partly the second lower layer function, and the central unit does not provide the second lower layer function; and
- combining the first information with a third information received from a second central unit that a third radio communication controlled by the second central unit is jammed with at least a third predefined jamming probability threshold, wherein the second central unit is different from the first central unit.

If the apparatus is a central controller or an element thereof, the means for generating 220 typically combines the first information with the third information (third option).

The means for evaluating 230 evaluates the combined information to obtain a jamming report as a result of the evaluating (S230).

If the apparatus comprises the means for causing 240, the means for causing 240 causes the first central unit to apply one or more jamming mitigation techniques of the higher layer function based on the jamming report (S240).

If the apparatus comprises the means for providing 250, the means for providing 250 provides the jamming report (S250). In detail, the means for providing may provide the jamming report according to at least one of the following options:

- providing the jamming report to at least one of the first central unit, the second central unit, and a third central unit different from each of the first central unit and the second central unit;
- providing the jamming report to at least one of the first lower layer function, the second lower layer function, and a third lower layer function different from each of the first lower layer function and the second lower layer function; and
- providing the jamming report to a central controller controlling the first central unit.

If the apparatus is a central controller or an element thereof, the means for providing 250 typically provides the jamming report to at least one of the first to third central units (first option).

If the apparatus comprises both the means for causing 240 and the means for providing 250 (as shown in Figs. 9, for example), the causing S240 and providing S250 may be performed in an arbitrary sequence. They may be performed fully or partly in parallel. Also, the means for generating 220 and the means for providing 250 may perform their different options fully or partly in parallel or in an arbitrary sequence.

Fig. 11 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform at least one of the methods according to Figs. 8 and 10 and related description.

Some example embodiments are explained where jamming detection is made with a granularity of time slot and sub-band for time and frequency, respectively. However, some example embodiments may apply different granularities. E.g., they may combine plural time slots and/or plural sub-bands. Also, the period for reporting the jamming report (if the same is reported periodically) may be arbitrary in different configurations.

Some example embodiments are explained with respect to a 5G network. However, the invention is not limited to 5G. It may be used in other networks, too, e.g. in forthcoming generations of 3GPP networks such as 6G, 7G, etc. It may be applicable to other radio access technologies (e.g. WiFi), too, if one or more lower layer function(s) are separated from the higher layer function(s).

In the context of the present application, it is irrelevant whether DU and RU are combined (i.e., the DU comprises RU functionality, too) or separated.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, a distributed unit or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a central unit or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, a central controller or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

**Claims**

1. Apparatus comprising:

> one or more processors (810), and
> memory (820) storing instructions that, when executed by the one or more processors (810), cause the apparatus to perform:

>> detecting that a radio communication of a distributed unit might be jammed with at least a predefined first jamming probability threshold;

informing a higher layer function of the radio communication that the radio communication might be jammed with at least the predefined first jamming probability threshold, wherein the radio communication comprises a lower layer function and the higher layer function controlling at least partly the lower layer function, the distributed unit provides the lower layer function, and the distributed unit does not provide the higher layer function.

2. The apparatus according to claim 1, wherein the instructions, when executed by the one or more processors (810), further cause the apparatus to perform: informing the higher layer function on at least one of

   • a time when the radio communication might be jammed with at least the predefined first jamming probability threshold;
   • one or more frequencies on which the radio communication might be jammed with at least the predefined first jamming probability threshold; and
   • one or more directions from where the radio communication might be jammed with at least the predefined first jamming probability threshold.

3. The apparatus according to any of claims 1 to 2, wherein the instructions, when executed by the one or more processors (810), further cause the apparatus to perform:

   monitoring if the higher layer function indicates that it wants to be informed if the radio communication might be jammed with at least the predefined first jamming probability threshold;
   inhibiting the informing that the radio communication might be jammed with at least the predefined first jamming probability threshold if the higher layer function does not indicate that it wants to be informed if the radio communication might be jammed with at least the predefined first jamming probability threshold.

4. The apparatus according to claim 3, wherein the instructions, when executed by the one or more processors (810), further cause the apparatus to perform: informing the higher layer function on one or more resources available at the distributed unit for detecting that the radio communication of the distributed unit might be jammed with at least the predefined first jamming probability threshold if the higher layer function indicates that it wants to be informed if the radio communication might be jammed with at least the predefined first jamming probability threshold.

5. The apparatus according to any of claims 1 to 4, wherein the instructions, when executed by the one or more processors (810), further cause the apparatus to perform:

   receiving a jamming report on the jamming of the radio communication from the higher layer function;
   applying one or more jamming mitigation techniques of the lower layer function based on the received jamming report.

6. The apparatus according to any of claims 1 to 5, wherein the jamming probability comprises at least one of a probability value in the interval [0; 1]; a function of probabilities, and a function of a probability density function.

7. Apparatus comprising:

   one or more processors (810), and
   memory (820) storing instructions that, when executed by the one or more processors (810), cause the apparatus to perform:

   receiving a first information that a first radio communication of a first central unit is jammed with at least a first predefined jamming probability threshold, wherein the first radio communication comprises a first lower layer function and a higher layer function controlling at least partly the first lower layer function, the first central unit provides the higher layer function, and the first central unit does not provide the first lower layer function; and
   generating combined information by at least one of

   • retrieving information of the higher layer function and combining the first information with the retrieved information;
   • combining the first information with a received second information that a second radio communication of the first central unit is jammed with at least a second predefined jamming probability threshold, wherein the second radio communication is different from the first radio communication, the second radio communication comprises a second lower layer function and the higher layer function controlling at least partly the second lower layer function, and the central unit does not provide the second lower layer function; and
• combining the first information with a third information received from a second central unit that a third radio communication controlled by the second central unit is jammed with at least a third predefined jamming probability threshold, wherein the second central unit is different from the first central unit;

evaluating the combined information to obtain a jamming report as a result of the evaluating; and at least one of

• causing the first central unit to apply one or more jamming mitigation techniques of the higher layer function based on the jamming report;
• providing the jamming report to at least one of the first central unit, the second central unit and a third central unit different from each of the first central unit and the second central unit;
• providing the jamming report to at least one of the first lower layer function, the second lower layer function, and a third lower layer function different from each of the first lower layer function and the second lower layer function; and
• providing the jamming report to a central controller controlling the first central unit.

8. The apparatus according to claim 7, wherein the first information comprises at least one of

• a time when the first radio communication might be jammed with at least the first predefined jamming probability threshold;
• one or more frequencies on which the first radio communication might be jammed with at least the first predefined jamming probability threshold; and
• one or more directions from where the first radio communication might be jammed with at least the first predefined jamming probability threshold.

9. The apparatus according to any of claims 7 and 8, wherein the higher layer function comprises a packet data convergence protocol layer at the first central unit related to the radio communication.

10. The apparatus according to any of claims 7 to 9, wherein the instructions, when executed by the one or more processors (810), further cause the apparatus to perform:

negotiating with at least one of the second central unit, the third central unit, the first lower layer function, the second lower layer function, the third lower layer function, and the central controller if the respective one of the second central unit, the third central unit, the first lower layer function, the second lower layer function, the third lower layer function, and the central controller wants to receive the jamming report;
inhibiting the providing of the jamming report to the respective one of the second central unit, the third central unit, the first lower layer function, the second lower layer function, the third lower layer function, and the central controller if the respective one of the second central unit, the third central unit, the first lower layer function, the second lower layer function, the third lower layer function, and the central controller does not want to receive the jamming report.

11. The apparatus according to claim 10, wherein the negotiating further comprises negotiating one or more resources on which the jamming report informs.

12. The apparatus according to any of claims 7 to 11, wherein the jamming probability comprises at least one of a probability value in the interval [0; 1]; a function of probabilities, and a function of a probability density function.

13. Method comprising:

detecting (S110) that a radio communication of a distributed unit might be jammed with at least a predefined first jamming probability threshold;
informing (S120) a higher layer function of the radio communication that the radio communication might be jammed with at least the predefined first jamming probability threshold, wherein the radio communication comprises a lower layer function and the higher layer function controlling at least partly the lower layer function, the distributed unit provides the lower layer function, and the distributed unit does not provide the higher layer function.

14. The method according to claim 13, further comprising:
informing the higher layer function on at least one of

• a time when the radio communication might be jammed with at least the predefined first jamming probability threshold;
• one or more frequencies on which the radio communication might be jammed with at least the predefined first jamming probability threshold; and

• one or more directions from where the radio communication might be jammed with at least the predefined first jamming probability threshold.

15. The method according to any of claims 13 to 14, further comprising:

monitoring if the higher layer function indicates that it wants to be informed if the radio communication might be jammed with at least the predefined first jamming probability threshold;
inhibiting the informing that the radio communication might be jammed with at least the predefined first jamming probability threshold if the higher layer function does not indicate that it wants to be informed if the radio communication might be jammed with at least the predefined first jamming probability threshold.

16. The method according to claim 15, further comprising:
informing the higher layer function on one or more resources available at the distributed unit for detecting that the radio communication of the distributed unit might be jammed with at least the predefined first jamming probability threshold if the higher layer function indicates that it wants to be informed if the radio communication might be jammed with at least the predefined first jamming probability threshold.

17. Method comprising:

receiving (S210) a first information that a first radio communication of a first central unit is jammed with at least a first predefined jamming probability threshold, wherein the first radio communication comprises a first lower layer function and a higher layer function controlling at least partly the first lower layer function, the first central unit provides the higher layer function, and the first central unit does not provide the first lower layer function; and
generating (S220) combined information by at least one of

• retrieving information of the higher layer function and combining the first information with the retrieved information;
• combining the first information with a received second information that a second radio communication of the first central unit is jammed with at least a second predefined jamming probability threshold, wherein the second radio communication is different from the first radio communication, the second radio communication comprises a second lower layer function and the higher layer function controlling at least partly the second lower layer function, and the central unit does not provide the second lower layer function; and
• combining the first information with a third information received from a second central unit that a third radio communication controlled by the second central unit is jammed with at least a third predefined jamming probability threshold, wherein the second central unit is different from the first central unit;

evaluating (230) the combined information to obtain a jamming report as a result of the evaluating; and at least one of

• causing (S240) the first central unit to apply one or more jamming mitigation techniques of the higher layer function based on the jamming report;
• providing (S250) the jamming report to at least one of the first central unit, the second central unit and a third central unit different from each of the first central unit and the second central unit;
• providing (S250) the jamming report to at least one of the first lower layer function, the second lower layer function, and a third lower layer function different from each of the first lower layer function and the second lower layer function; and
• providing (S250) the jamming report to a central controller controlling the first central unit.

18. The method according to claim 17, wherein the first information comprises at least one of

• a time when the first radio communication might be jammed with at least the first predefined jamming probability threshold;
• one or more frequencies on which the first radio communication might be jammed with at least the first predefined jamming probability threshold; and
• one or more directions from where the first radio communication might be jammed with at least the first predefined jamming probability threshold.

19. The method according to any of claims 17 and 18, wherein the higher layer function comprises a packet data convergence protocol layer at the first central unit related to the radio communication.

20. The method according to any of claims 17 to 19, further comprising:

negotiating with at least one of the second central unit, the third central unit, the first lower layer function, the second lower layer function, the third lower layer function, and the central controller if the respective one of the second central unit, the third central unit, the first lower layer function, the second lower layer function, the third lower layer function, and the central controller wants to receive the jamming report; inhibiting the providing of the jamming report to the respective one of the second central unit, the third central unit, the first lower layer function, the second lower layer function, the third lower layer function, and the central controller if the respective one of the second central unit, the third central unit, the first lower layer function, the second lower layer function, the third lower layer function, and the central controller does not want to receive the jamming report.

**Patentansprüche**

1. Vorrichtung, die Folgendes umfasst:

    einen oder mehrere Prozessoren (810), und Speicher (820) zum Speichern von Anweisungen, die, wenn sie von dem einen oder den mehreren Prozessoren (810) ausgeführt werden, die Vorrichtung veranlassen, Folgendes durchzuführen:

        Detektieren, dass eine Funkkommunikation einer verteilten Einheit mit mindestens einem vordefinierten ersten Blockierungswahrscheinlichkeitsschwellwert blockiert sein könnte;
        Informieren einer Funktion einer höheren Schicht der Funkkommunikation, dass die Funkkommunikation mit mindestens dem vordefinierten ersten Blockierungswahrscheinlichkeitsschwellwert blockiert sein könnte, wobei die Funkkommunikation eine Funktion einer niedrigeren Schicht und die Funktion einer höheren Schicht, die die Funktion einer niedrigeren Schicht mindestens teilweise steuert, umfasst, die verteilte Einheit die Funktion einer niedrigeren Schicht bereitstellt und die verteilte Einheit die Funktion einer höheren Schicht nicht bereitstellt.

2. Vorrichtung nach Anspruch 1, wobei die Anweisungen, wenn sie von dem einen oder den mehreren Prozessoren (810) ausgeführt werden, die Vorrichtung ferner veranlassen, Folgendes durchzuführen: Informieren der Funktion einer höheren Schicht über mindestens eines von Folgendem

• eine Zeit, zu der die Funkkommunikation mit mindestens dem vordefinierten ersten Blockierungswahrscheinlichkeitsschwellwert blockiert sein könnte;
• eine oder mehrere Frequenzen, auf denen die Funkkommunikation mit mindestens dem vordefinierten ersten Blockierungswahrscheinlichkeitsschwellwert blockiert sein könnte; und
• eine oder mehrere Richtungen, aus denen die Funkkommunikation mit mindestens dem vordefinierten ersten Blockierungswahrscheinlichkeitsschwellwert blockiert sein könnte.

3. Vorrichtung nach einem der Ansprüche 1 bis 2, wobei die Anweisungen, wenn sie von dem einen oder den mehreren Prozessoren (810) ausgeführt werden, die Vorrichtung ferner veranlassen, Folgendes durchzuführen:

    Überwachen, ob die Funktion einer höheren Schicht anzeigt, dass sie informiert werden möchte, wenn die Funkkommunikation mit mindestens dem vordefinierten ersten Blockierungswahrscheinlichkeitsschwellwert blockiert sein könnte;
    Unterbinden des Informierens, dass die Funkkommunikation mit mindestens dem vordefinierten ersten Blockierungswahrscheinlichkeitsschwellwert blockiert sein könnte, wenn die Funktion einer höheren Schicht nicht anzeigt, dass sie informiert werden möchte, wenn die Funkkommunikation mit mindestens dem vordefinierten ersten Blockierungswahrscheinlichkeitsschwellwert blockiert sein könnte.

4. Vorrichtung nach Anspruch 3, wobei die Anweisungen, wenn sie von dem einen oder den mehreren Prozessoren (810) ausgeführt werden, die Vorrichtung ferner veranlassen, Folgendes durchzuführen: Informieren der Funktion einer höheren Schicht über eine oder mehrere Ressourcen, die an der verteilten Einheit zum Detektieren, dass die Funkkommunikation der verteilten Einheit mit mindestens dem vordefinierten ersten Blockierungswahrscheinlichkeitsschwellwert blockiert sein könnte, verfügbar sind, wenn die Funktion einer höheren Schicht anzeigt, dass sie informiert werden möchte, wenn die Funkkommunikation mit mindestens dem vordefinierten ersten Blockierungswahrscheinlichkeitsschwellwert blockiert sein könnte.

5. Vorrichtung nach einem der Ansprüche 1 bis 4, wobei die Anweisungen, wenn sie von dem einen oder den mehreren Prozessoren (810) ausgeführt werden, die Vorrichtung ferner veranlassen, Folgendes durchzuführen:

    Empfangen eines Blockierungsberichts über die Blockierung der Funkkommunikation von der Funktion einer höheren Schicht;

Anwenden von einer oder mehreren Blockierungsminderungstechniken der Funktion einer niedrigeren Schicht auf Basis des empfangenen Blockierungsberichts.

6. Vorrichtung nach einem der Ansprüche 1 bis 5, wobei die Blockierungswahrscheinlichkeit mindestens eines von einem Wahrscheinlichkeitswert im Intervall [0; 1]; eine Funktion von Wahrscheinlichkeiten und eine Funktion einer Wahrscheinlichkeitsdichtefunktion umfasst.

7. Vorrichtung, die Folgendes umfasst:

einen oder mehrere Prozessoren (810), und Speicher (820) zum Speichern von Anweisungen, die, wenn sie von dem einen oder den mehreren Prozessoren (810) ausgeführt werden, die Vorrichtung veranlassen, Folgendes durchzuführen:

Empfangen von ersten Informationen, dass eine Funkkommunikation einer ersten Zentraleinheit mit mindestens einem vordefinierten Blockierungswahrscheinlichkeitsschwellwert blockiert ist, wobei die erste Funkkommunikation eine erste Funktion einer niedrigeren Schicht und eine Funktion einer höheren Schicht, die die Funktion einer niedrigeren Schicht mindestens teilweise steuert, umfasst, die erste Zentraleinheit die Funktion einer höheren Schicht bereitstellt und die erste Zentraleinheit die Funktion einer niedrigeren Schicht nicht bereitstellt; und

Erzeugen von kombinierten Informationen durch mindestens eines von Folgendem

• Abrufen von Informationen der Funktion einer höheren Schicht und Kombinieren der ersten Informationen mit den abgerufenen Informationen;

• Kombinieren der ersten Informationen mit empfangenen zweiten Informationen, dass eine zweite Funkkommunikation der ersten Zentraleinheit mit mindestens einem zweiten vordefinierten Blockierungswahrscheinlichkeitsschwellwert blockiert ist, wobei sich die zweite Funkkommunikation von der ersten Funkkommunikation unterscheidet, die zweite Funkkommunikation eine zweite Funktion einer niedrigeren Schicht und die Funktion einer höheren Schicht, die die zweite Funktion einer niedrigeren Schicht mindestens teilweise steuert, umfasst und die Zentraleinheit die zweite Funktion einer niedrigeren Schicht nicht bereitstellt; und

• Kombinieren der ersten Informationen mit dritten Informationen, die von einer zweiten Zentraleinheit empfangen werden, dass eine dritte Funkkommunikation, die von der zweiten Zentraleinheit gesteuert wird, mit mindestens einem dritten vordefinierten Blockierungswahrscheinlichkeitsschwellwert blockiert ist, wobei sich die zweite Zentraleinheit von der ersten Zentraleinheit unterscheidet;

Beurteilen der kombinierten Informationen, um als ein Ergebnis der Beurteilung einen Blockierungsbericht zu erhalten; und mindestens eines von Folgendem

• Veranlassen der ersten Zentraleinheit zum Anwenden von einer oder mehreren Blockierungsminderungstechniken der Funktion einer höheren Schicht auf Basis des Blockierungsberichts;

• Bereitstellen des Blockierungsberichts für mindestens eine der ersten Zentraleinheit, der zweiten Zentraleinheit und einer dritten Zentraleinheit, die sich von der ersten Zentraleinheit und der zweiten Zentraleinheit unterscheidet;

• Bereitstellen des Blockierungsberichts für mindestens eine der ersten Funktion einer niedrigeren Schicht, der zweiten Funktion einer niedrigeren Schicht und einer dritten Funktion einer niedrigeren Schicht, die sich von der ersten Funktion einer niedrigeren Schicht und der zweiten Funktion einer niedrigeren Schicht unterscheidet; und

• Bereitstellen des Blockierungsberichts für eine zentrale Steuerung, die die erste Zentraleinheit steuert.

8. Vorrichtung nach Anspruch 7, wobei die ersten Informationen mindestens eines von Folgendem umfassen

• eine Zeit, zu der die erste Funkkommunikation mit mindestens dem ersten vordefinierten Blockierungswahrscheinlichkeitsschwellwert blockiert sein könnte;

• eine oder mehrere Frequenzen, auf denen die erste Funkkommunikation mit mindestens dem ersten vordefinierten Blockierungswahrscheinlichkeitsschwellwert blockiert sein könnte; und

• eine oder mehrere Richtungen, aus denen die erste Funkkommunikation mit mindestens dem ersten vordefinierten Blockierungswahrscheinlichkeitsschwellwert blockiert sein könnte.

9. Vorrichtung nach einem der Ansprüche 7 und 8, wobei die Funktion einer höheren Schicht eine Paketdatenkonvergenzprotokollschicht an der ersten Zentraleinheit umfasst, die die Funkkommunikation betrifft.

10. Vorrichtung nach einem der Ansprüche 7 bis 9, wobei die Anweisungen, wenn sie von dem einen oder den mehreren Prozessoren (810) ausgeführt werden, die Vorrichtung ferner veranlassen, Folgendes durchzuführen:

Verhandeln mit mindestens einer der zweiten Zentraleinheit, der dritten Zentraleinheit, der ersten Funktion einer niedrigeren Schicht, der zweiten Funktion einer niedrigeren Schicht, der dritten Funktion einer niedrigeren Schicht und der zentralen Steuerung, wenn die jeweilige der zweiten Zentraleinheit, der dritten Zentraleinheit, der ersten Funktion einer niedrigeren Schicht, der zweiten Funktion einer niedrigeren Schicht, der dritten Funktion einer niedrigeren Schicht und der zentralen Steuerung den Blockierungsbericht empfangen möchte;
Unterbinden des Bereitstellens des Blockierungsberichts für die jeweilige eine der zweiten Zentraleinheit, der dritten Zentraleinheit, der ersten Funktion einer niedrigeren Schicht, der zweiten Funktion einer niedrigeren Schicht, der dritten Funktion einer niedrigeren Schicht und der zentralen Steuerung, wenn die jeweilige der zweiten Zentraleinheit, der dritten Zentraleinheit, der ersten Funktion einer niedrigeren Schicht, der zweiten Funktion einer niedrigeren Schicht, der dritten Funktion einer niedrigeren Schicht und der zentralen Steuerung den Blockierungsbericht nicht empfangen möchte.

11. Vorrichtung nach Anspruch 10, wobei das Verhandeln ferner Folgendes umfasst
Verhandeln von einer oder mehreren Ressourcen, über die der Blockierungsbericht informiert,.

12. Vorrichtung nach einem der Ansprüche 7 bis 11, wobei die Blockierungswahrscheinlichkeit mindestens eines von einem Wahrscheinlichkeitswert im Intervall [0; 1]; eine Funktion von Wahrscheinlichkeiten und eine Funktion einer Wahrscheinlichkeitsdichtefunktion umfasst.

13. Verfahren, das Folgendes umfasst:

Detektieren (S110), dass eine Funkkommunikation einer verteilten Einheit mit mindestens einem vordefinierten ersten Blockierungswahrscheinlichkeitsschwellwert blockiert sein könnte;
Informieren (S120) einer Funktion einer höheren Schicht der Funkkommunikation, dass die Funkkommunikation mit mindestens dem vordefinierten ersten Blockierungswahrscheinlichkeitsschwellwert blockiert sein könnte, wobei die Funkkommunikation eine Funktion einer niedrigeren Schicht und die Funktion einer höheren Schicht, die die Funktion einer niedrigeren Schicht mindestens teilweise steuert, umfasst, die verteilte Einheit die Funktion einer niedrigeren Schicht bereitstellt und die verteilte Einheit die Funktion einer höheren Schicht nicht bereitstellt.

14. Verfahren nach Anspruch 13, das ferner Folgendes umfasst:
Informieren der Funktion einer höheren Schicht über mindestens eines von Folgendem

• eine Zeit, zu der die Funkkommunikation mit mindestens dem vordefinierten ersten Blockierungswahrscheinlichkeitsschwellwert blockiert sein könnte;
• eine oder mehrere Frequenzen, auf denen die Funkkommunikation mit mindestens dem vordefinierten ersten Blockierungswahrscheinlichkeitsschwellwert blockiert sein könnte; und
• eine oder mehrere Richtungen, aus denen die Funkkommunikation mit mindestens dem vordefinierten ersten Blockierungswahrscheinlichkeitsschwellwert blockiert sein könnte.

15. Verfahren nach einem der Ansprüche 13 bis 14, das ferner Folgendes umfasst:

Überwachen, ob die Funktion einer höheren Schicht anzeigt, dass sie informiert werden möchte, wenn die Funkkommunikation mit mindestens dem vordefinierten ersten Blockierungswahrscheinlichkeitsschwellwert blockiert sein könnte;
Unterbinden des Informierens, dass die Funkkommunikation mit mindestens dem vordefinierten ersten Blockierungswahrscheinlichkeitsschwellwert blockiert sein könnte, wenn die Funktion einer höheren Schicht nicht anzeigt, dass sie informiert werden möchte, wenn die Funkkommunikation mit mindestens dem vordefinierten ersten Blockierungswahrscheinlichkeitsschwellwert blockiert sein könnte.

16. Verfahren nach Anspruch 15, das ferner Folgendes umfasst:
Informieren der Funktion einer höheren Schicht über eine oder mehrere Ressourcen, die an der verteilten Einheit zum Detektieren, dass die Funkkommunikation der verteilten Einheit mit mindestens dem vordefinierten ersten Blockierungswahrscheinlichkeitsschwellwert blockiert sein könnte, verfügbar sind, wenn die Funktion einer höheren Schicht anzeigt, dass sie informiert werden möchte, wenn die Funkkommunikation mit mindestens dem vordefinierten ersten Blockierungswahrscheinlichkeitsschwellwert blockiert sein könnte.

17. Verfahren, das Folgendes umfasst:

Empfangen (S210) von ersten Informationen, dass eine Funkkommunikation einer ersten Zentraleinheit mit mindestens einem vordefinierten Blockierungswahrscheinlichkeitsschwellwert blockiert ist, wobei die erste Funkkommunikation eine erste Funktion einer niedrigeren Schicht und eine Funktion einer höheren Schicht, die die Funktion einer niedrigeren Schicht mindestens teilweise steuert, umfasst, die erste Zentraleinheit die Funktion einer höheren Schicht bereitstellt und die erste Zentraleinheit die Funktion einer niedrigeren Schicht nicht bereitstellt; und
Erzeugen (S220) von kombinierten Informationen durch mindestens eines von Folgendem

• Abrufen von Informationen der Funktion einer höheren Schicht und Kombinieren der ersten Informationen mit den abgerufenen Informationen;
• Kombinieren der ersten Informationen mit empfangenen zweiten Informationen, dass eine zweite Funkkommunikation der ersten Zentraleinheit mit mindestens einem zweiten vordefinierten Blockierungswahrscheinlichkeitsschwellwert blockiert ist, wobei sich die zweite Funkkommunikation von der ersten Funkkommunikation unterscheidet, die zweite Funkkommunikation eine zweite Funktion einer niedrigeren Schicht und die Funktion einer höheren Schicht, die die zweite Funktion einer niedrigeren Schicht mindestens teilweise steuert, umfasst und die Zentraleinheit die zweite Funktion einer niedrigeren Schicht nicht bereitstellt; und
• Kombinieren der ersten Informationen mit dritten Informationen, die von einer zweiten Zentraleinheit empfangen werden, dass eine dritte Funkkommunikation, die von der zweiten Zentraleinheit gesteuert wird, mit mindestens einem dritten vordefinierten Blockierungswahrscheinlichkeitsschwellwert blockiert ist, wobei sich die zweite Zentraleinheit von der ersten Zentraleinheit unterscheidet;

Beurteilen (230) der kombinierten Informationen, um als ein Ergebnis der Beurteilung einen Blockierungsbericht zu erhalten; und mindestens eines von Folgendem

• Veranlassen (S240) der ersten Zentraleinheit zum Anwenden von einer oder mehreren Blockierungsminderungstechniken der Funktion einer höheren Schicht auf Basis des Blockierungsberichts;
• Bereitstellen (S250) des Blockierungsberichts für mindestens eine der ersten Zentraleinheit, der zweiten Zentraleinheit und einer dritten Zentraleinheit, die sich von der ersten Zentraleinheit und der zweiten Zentraleinheit unterscheidet;
• Bereitstellen (S250) des Blockierungsberichts für mindestens eine der ersten Funktion einer niedrigeren Schicht, der zweiten Funktion einer niedrigeren Schicht und einer dritten Funktion einer niedrigeren Schicht, die sich von der ersten Funktion einer niedrigeren Schicht und der zweiten Funktion einer niedrigeren Schicht unterscheidet; und
• Bereitstellen (S250) des Blockierungsberichts für eine zentrale Steuerung, die die erste Zentraleinheit steuert.

18. Verfahren nach Anspruch 17, wobei die ersten Informationen mindestens eines von Folgendem umfassen

• eine Zeit, zu der die erste Funkkommunikation mit mindestens dem ersten vordefinierten Blockierungswahrscheinlichkeitsschwellwert blockiert sein könnte;
• eine oder mehrere Frequenzen, auf denen die erste Funkkommunikation mit mindestens dem ersten vordefinierten Blockierungswahrscheinlichkeitsschwellwert blockiert sein könnte; und
• eine oder mehrere Richtungen, aus denen die erste Funkkommunikation mit mindestens dem ersten vordefinierten Blockierungswahrscheinlichkeitsschwellwert blockiert sein könnte.

19. Verfahren nach einem der Ansprüche 17 und 18, wobei die Funktion einer höheren Schicht eine Paketdatenkonvergenzprotokollschicht an der ersten Zentraleinheit umfasst, die die Funkkommunikation betrifft.

20. Verfahren nach einem der Ansprüche 17 bis 19, das ferner Folgendes umfasst:

Verhandeln mit mindestens einer der zweiten Zentraleinheit, der dritten Zentraleinheit, der ersten Funktion einer niedrigeren Schicht, der zweiten Funktion einer niedrigeren Schicht, der dritten Funktion einer niedrigeren Schicht und der zentralen Steuerung, wenn die jeweilige der zweiten Zentraleinheit, der dritten Zentraleinheit, der ersten Funktion einer niedrigeren Schicht, der zweiten Funktion einer niedrigeren Schicht, der dritten Funktion einer niedrigeren Schicht und der zentralen Steuerung den Blockierungsbericht empfangen möchte;

Unterbinden des Bereitstellens des Blockierungsberichts für die jeweilige eine der zweiten Zentraleinheit, der dritten Zentraleinheit, der ersten Funktion einer niedrigeren Schicht, der zweiten Funktion einer niedrigeren Schicht, der dritten Funktion einer niedrigeren Schicht und der zentralen Steuerung, wenn die jeweilige der zweiten Zentraleinheit, der dritten Zentraleinheit, der ersten Funktion einer niedrigeren Schicht, der zweiten Funktion einer niedrigeren Schicht, der dritten Funktion einer niedrigeren Schicht und der zentralen Steuerung den Blockierungsbericht nicht empfangen möchte.

## Revendications

1. Appareil comprenant :

   un ou plusieurs processeurs (810), et
   une mémoire (820) stockant des instructions qui, lorsqu'elles sont exécutées par les un ou plusieurs processeurs (810), amènent l'appareil à effectuer les étapes suivantes :

   détecter qu'une communication radio d'une unité distribuée pourrait être brouillée avec au moins un premier seuil de probabilité de brouillage prédéfini ;
   informer une fonction de couche supérieure de la communication radio que la communication radio pourrait être brouillée avec au moins le premier seuil de probabilité de brouillage prédéfini, dans lequel la communication radio comprend une fonction de couche inférieure et la fonction de couche supérieure commandant au moins partiellement la fonction de couche inférieure, l'unité distribuée fournit la fonction de couche inférieure, et l'unité distribuée ne fournit pas la fonction de couche supérieure.

2. Appareil selon la revendication 1, dans lequel les instructions, lorsqu'elles sont exécutées par les un ou plusieurs processeurs (810), amènent en outre l'appareil à effectuer les étapes suivantes :
   informer la fonction de couche supérieure d'au moins des éléments suivants

   • un moment où la communication radio pourrait être brouillée avec au moins le premier seuil de probabilité de brouillage prédéfini ;
   • une ou plusieurs fréquences sur lesquelles la communication radio pourrait être brouillée avec au moins le premier seuil de probabilité de brouillage prédéfini ; et
   • une ou plusieurs directions à partir desquelles la communication radio pourrait être brouillée avec au moins le premier seuil de probabilité de brouillage prédéfini.

3. Appareil selon l'une des revendications 1 et 2, dans lequel les instructions, lorsqu'elles sont exécutées par les un ou plusieurs processeurs (810), amènent en outre l'appareil à effectuer les étapes suivantes :

   surveiller si la fonction de couche supérieure indique qu'elle souhaite être informée en cas de possibilité de brouillage de la communication radio avec au moins le premier seuil de probabilité de brouillage prédéfini ;
   inhiber les informations selon lesquelles la communication radio pourrait être brouillée avec au moins le premier seuil de probabilité de brouillage prédéfini si la fonction de couche supérieure n'indique pas qu'elle souhaite être informée en cas de possibilité de brouillage de la communication radio avec au moins le premier seuil de probabilité de brouillage prédéfini.

4. Appareil selon la revendication 3, dans lequel les instructions, lorsqu'elles sont exécutées par les un ou plusieurs processeurs (810), amènent en outre l'appareil à effectuer les étapes suivantes :
   informer la fonction de couche supérieure sur une ou plusieurs ressources disponibles dans l'unité distribuée pour détecter que la communication radio de l'unité distribuée pourrait être brouillée avec au moins le premier seuil de probabilité de brouillage prédéfini si la fonction de couche supérieure indique qu'elle souhaite être informée en cas de possibilité de brouillage de la communication radio avec au moins le premier seuil de probabilité de brouillage prédéfini.

5. Appareil selon l'une des revendications 1 à 4, dans lequel les instructions, lorsqu'elles sont exécutées par les un ou plusieurs processeurs (810), amènent en outre l'appareil à effectuer les étapes suivantes :

   recevoir un rapport de brouillage sur le brouillage de la communication radio de la fonction de couche supérieure ;
   appliquer une ou plusieurs techniques d'atténuation de brouillage de la fonction de couche inférieure sur la base du rapport de brouillage reçu.

6. Appareil selon l'une des revendications 1 à 5, dans lequel la probabilité de brouillage comprend au moins un parmi une valeur de probabilité dans l'intervalle [0 ; 1] ; une fonction de probabilités et une fonction de densité de probabilité.

7. Appareil comprenant :

un ou plusieurs processeurs (810), et une mémoire (820) stockant des instructions qui, lorsqu'elles sont exécutées par les un ou plusieurs processeurs (810), amènent l'appareil à effectuer les étapes suivantes :

recevoir des premières informations selon lesquelles une première communication radio d'une première unité centrale est brouillée avec au moins un premier seuil de probabilité de brouillage prédéfini, dans lequel la première communication radio comprend un première fonction de couche inférieure et une fonction de couche supérieure commandant au moins partiellement la première fonction de couche inférieure, la première unité centrale fournit la fonction de couche supérieure, et la première unité centrale ne fournit pas la première fonction de couche inférieure ; et

générer des informations combinées par au moins l'une des actions suivantes

• récupérer des informations de la fonction de couche supérieure et combiner les premières informations avec les informations récupérées ;
• combiner les premières informations avec des deuxièmes informations récupérées selon lesquelles une deuxième communication radio de la première unité centrale est brouillée avec au moins un deuxième seuil de probabilité de brouillage prédéfini, dans lequel la deuxième communication radio est différente de la première communication radio, la deuxième communication radio comprend une deuxième fonction de couche inférieure et la fonction de couche supérieure commandant au moins partiellement la deuxième fonction de couche inférieure, et l'unité centrale ne fournit pas la deuxième fonction de couche inférieure ; et
• combiner les premières informations avec des troisièmes informations reçues d'une deuxième unité centrale selon lesquelles une troisième communication radio commandée par la deuxième unité centrale est brouillée avec au moins un troisième seuil de probabilité de brouillage prédéfini, dans lequel la deuxième unité centrale est différente de la première unité centrale ;

évaluer les informations combinées pour obtenir un rapport de brouillage à la suite de l'évaluation ; et au moins l'une des actions suivantes

• amener la première unité centrale à appliquer une ou plusieurs techniques d'atténuation de brouillage de la fonction de couche supérieure sur la base du rapport de brouillage ;
• fournir le rapport de brouillage à au moins une parmi la première unité centrale, la deuxième unité centrale et une troisième unité centrale différente de chacune parmi la première unité centrale et la deuxième unité centrale ;
• fournir le rapport de brouillage à au moins une parmi la première fonction de couche inférieure, la deuxième fonction de couche inférieure et une troisième fonction de couche inférieure différente de chacune parmi la première fonction de couche inférieure et la deuxième fonction de couche inférieure ; et
• fournir le rapport de brouillage à un dispositif de commande central qui commande la première unité centrale.

8. Appareil selon la revendication 7, dans lequel les premières informations comprennent au moins un parmi

• un moment où la première communication radio pourrait être brouillée avec au moins le premier seuil de probabilité de brouillage prédéfini ;
• une ou plusieurs fréquences sur lesquelles la première communication radio pourrait être brouillée avec au moins le premier seuil de probabilité de brouillage prédéfini ; et
• une ou plusieurs directions à partir desquelles la première communication radio pourrait être brouillée avec au moins le premier seuil de probabilité de brouillage prédéfini.

9. Appareil selon l'une des revendications 7 et 8, dans lequel la fonction de couche supérieure comprend une couche de protocole de convergence de données par paquets dans la première unité centrale liée à la communication radio.

**10.** Appareil selon l'une des revendications 7 à 9, dans lequel les instructions, lorsqu'elles sont exécutées par les un ou plusieurs processeurs (810), amènent en outre l'appareil à effectuer les étapes suivantes :

négocier avec au moins un parmi la deuxième unité centrale, la troisième unité centrale, la première fonction de couche inférieure, la deuxième fonction de couche inférieure, la troisième fonction de couche inférieure et le dispositif de commande central si un parmi la deuxième unité centrale, la troisième unité centrale, la première fonction de couche inférieure, la deuxième fonction de couche inférieure, la troisième fonction de couche inférieure et le dispositif de commande central, respectivement, souhaite recevoir le rapport de brouillage ;

inhiber la transmission du rapport de brouillage à un parmi la deuxième unité centrale, la troisième unité centrale, la première fonction de couche inférieure, la deuxième fonction de couche inférieure, la troisième fonction de couche inférieure et le dispositif de commande central, respectivement, si un parmi la deuxième unité centrale, la troisième unité centrale, la première fonction de couche inférieure, la deuxième fonction de couche inférieure, la troisième fonction de couche inférieure et le dispositif de commande central, respectivement, ne souhaite pas recevoir le rapport de brouillage.

**11.** Appareil selon la revendication 10, dans lequel la négociation comprend en outre la négociation d'une ou plusieurs ressources sur lesquelles le rapport de brouillage donne des informations.

**12.** Appareil selon l'une des revendications 7 à 11, dans lequel la probabilité de brouillage comprend au moins un parmi une valeur de probabilité dans l'intervalle [0 ; 1] ; une fonction de probabilités et une fonction de densité de probabilité.

**13.** Procédé comprenant les étapes suivantes :

détecter (S110) qu'une communication radio d'une unité distribuée pourrait être brouillée avec au moins un premier seuil de probabilité de brouillage prédéfini ;

informer (S120) une fonction de couche supérieure de la communication radio que la communication radio pourrait être brouillée avec au moins le premier seuil de probabilité de brouillage prédéfini, dans lequel la communication radio comprend une fonction de couche inférieure et la fonction de couche supérieure commandant au moins partiellement la fonction de couche inférieure, l'unité distribuée fournit la fonction de couche inférieure, et l'unité distribuée ne fournit pas la fonction de couche supérieure.

**14.** Procédé selon la revendication 13, comprenant en outre les étapes suivantes :
informer la fonction de couche supérieure d'au moins des éléments suivants

• un moment où la communication radio pourrait être brouillée avec au moins le premier seuil de probabilité de brouillage prédéfini ;
• une ou plusieurs fréquences sur lesquelles la communication radio pourrait être brouillée avec au moins le premier seuil de probabilité de brouillage prédéfini ; et
• une ou plusieurs directions à partir desquelles la communication radio pourrait être brouillée avec au moins le premier seuil de probabilité de brouillage prédéfini.

**15.** Procédé selon l'une des revendications 13 et 14, comprenant en outre :

surveiller si la fonction de couche supérieure indique qu'elle souhaite être informée en cas de possibilité de brouillage de la communication radio avec au moins le premier seuil de probabilité de brouillage prédéfini ;

inhiber les informations selon lesquelles la communication radio pourrait être brouillée avec au moins le premier seuil de probabilité de brouillage prédéfini si la fonction de couche supérieure n'indique pas qu'elle souhaite être informée en cas de possibilité de brouillage de la communication radio avec au moins le premier seuil de probabilité de brouillage prédéfini.

**16.** Procédé selon la revendication 15, comprenant en outre :
informer la fonction de couche supérieure sur une ou plusieurs ressources disponibles dans l'unité distribuée pour détecter que la communication radio de l'unité distribuée pourrait être brouillée avec au moins le premier seuil de probabilité de brouillage prédéfini si la fonction de couche supérieure indique qu'elle souhaite être informée en cas de possibilité de brouillage de la communication radio avec au moins le premier seuil de probabilité de brouillage prédéfini.

**17.** Procédé comprenant les étapes suivantes :

recevoir (S210) des premières informations selon lesquelles une première communication radio d'une première unité centrale est brouillée avec au moins un premier seuil de probabilité de brouillage prédéfini, dans lequel la première communication radio comprend un première fonction de couche inférieure et une fonction de couche supérieure commandant au moins partiellement la première fonction de couche inférieure, la première unité centrale fournit la fonction de couche supérieure, et la première unité centrale ne fournit pas la première fonction de couche inférieure ; et

générer (S220) des informations combinées par au moins l'une des actions suivantes

> • récupérer des informations de la fonction de couche supérieure et combiner les premières informations avec les informations récupérées ;
> • combiner les premières informations avec des deuxièmes informations récupérées selon lesquelles une deuxième communication radio de la première unité centrale est brouillée avec au moins un deuxième seuil de probabilité de brouillage prédéfini, dans lequel la deuxième communication radio est différente de la première communication radio, la deuxième communication radio comprend une deuxième fonction de couche inférieure et la fonction de couche supérieure commandant au moins partiellement la deuxième fonction de couche inférieure, et l'unité centrale ne fournit pas la deuxième fonction de couche inférieure ; et
> • combiner les premières informations avec des troisièmes informations reçues d'une deuxième unité centrale selon lesquelles une troisième communication radio commandée par la deuxième unité centrale est brouillée avec au moins un troisième seuil de probabilité de brouillage prédéfini, dans lequel la deuxième unité centrale est différente de la première unité centrale ;

évaluer (230) les informations combinées pour obtenir un rapport de brouillage à la suite de l'évaluation ; et au moins l'une des actions suivantes

> • amener (S240) la première unité centrale à appliquer une ou plusieurs techniques d'atténuation de brouillage de la fonction de couche supérieure sur la base du rapport de brouillage ;
> • fournir (S250) le rapport de brouillage à au moins une parmi la première unité centrale, la deuxième unité centrale et une troisième unité centrale différente de chacune parmi la première unité centrale et la deuxième unité centrale ;
> • fournir (S250) le rapport de brouillage à au moins une parmi la première fonction de couche inférieure, la deuxième fonction de couche inférieure et une troisième fonction de couche inférieure différente de chacune parmi la première fonction de couche inférieure et la deuxième fonction de couche inférieure ; et
> • fournir (S250) le rapport de brouillage à un dispositif de commande central qui commande la première unité centrale.

**18.** Procédé selon la revendication 17, dans lequel les premières informations comprennent au moins un parmi

> • un moment où la première communication radio pourrait être brouillée avec au moins le premier seuil de probabilité de brouillage prédéfini ;
> • une ou plusieurs fréquences sur lesquelles la première communication radio pourrait être brouillée avec au moins le premier seuil de probabilité de brouillage prédéfini ; et
> • une ou plusieurs directions à partir desquelles la première communication radio pourrait être brouillée avec au moins le premier seuil de probabilité de brouillage prédéfini.

**19.** Procédé selon l'une des revendications 17 et 18, dans lequel la fonction de couche supérieure comprend une couche de protocole de convergence de données par paquets dans la première unité centrale liée à la communication radio.

**20.** Procédé selon l'une des revendications 17 à 19, comprenant en outre les étapes suivantes :

> négocier avec au moins un parmi la deuxième unité centrale, la troisième unité centrale, la première fonction de couche inférieure, la deuxième fonction de couche inférieure, la troisième fonction de couche inférieure et le dispositif de commande central si un parmi la deuxième unité centrale, la troisième unité centrale, la première fonction de couche inférieure, la deuxième fonction de couche inférieure, la troisième fonction de couche inférieure et le dispositif de commande central, respectivement, souhaite recevoir le rapport de brouillage ;
> inhiber la transmission du rapport de brouillage à un parmi la deuxième unité centrale, la troisième unité centrale, la première fonction de couche inférieure, la deuxième fonction de couche inférieure, la troisième fonction de couche inférieure et le dispositif de commande central, respectivement, si un parmi la deuxième unité centrale, la troisième unité centrale, la première fonction de couche inférieure, la deuxième fonction de couche inférieure, la troisième fonction de couche inférieure et le dispositif de commande central, respectivement, ne souhaite pas recevoir le rapport de brouillage.

gNB2

| CU |

F1

| DU |

F2

| RU |

Xn

gNB1

| CU |

F1

| DU |

F2

| RU |

Fig. 1

Received complex baseband signal → **Operations for jamming detection at the DU**

DCJD →

**Operations for jamming detection at the CU**

← CDJD

CC-CU interface

CcCJD ←

**Operations for jamming detection at the CC**

CCJD →

CCJD (from other CUs) ←

F1 interface

Xn interface

Fig. 2

Fig. 3

EP 4 060 915 B1

Fig. 4

EP 4 060 915 B1

Fig. 5

EP 4 060 915 B1

```
        ┌────────┐                                              ┌────────┐
        │   CC   │                                              │   CU   │
        └───┬────┘                                              └───┬────┘
            │  1        Request of sharing CCJD report             │
            │──────────────────────────────────────────────────→  │
            │  2               CUJDResources                       │
            │  ←──────────────────────────────────────────────────│
            │  3               CCJDConfigMsg                       │
            │──────────────────────────────────────────────────→  │
            │  4                    ACK                            │
            │  ←──────────────────────────────────────────────────│
            ▼                                                      ▼
```

Fig. 6

EP 4 060 915 B1

| 110 |
|-----|
| 120 |

**Fig. 7**

| Detect jamming at lower layer function | S110 |
|---|---|

| Inform higher layer function on jamming | S120 |

**Fig. 8**

EP 4 060 915 B1

| 210 |
|---|
| 220 |
| 230 |
| 240 |
| 250 |

Fig. 9

| 810 |
|---|
| 820 |

Fig. 11

S210
Receive information on jamming

S220
Generate combined information

S230
Evaluate combined information

S240
Cause higher layer function to apply jamming mitigation technique

S250
Provide jamming report

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FI 20205440

- CN 2020098301 W

**Non-patent literature cited in the description**

- **PIQUERAS JOVER ROGER.** Security attacks against the availability of LTE mobility networks: Overview and research directions. *2013 16TH INTERNATIONAL SYMPOSIUM ON WIRELESS PERSONAL MULTIMEDIA COMMUNICATIONS (WPMC), NICT,* 24 June 2013, ISSN 1347-6890, 1-9

- **PIDS.** 5G report to be checked for LI. *ETSI DRAFT; LI(17)R41001R1, EUROPEAN TELECOMMUNICATIONS STANDARDS INSTITUTE (ETSI), 650, ROUTE DES LUCIOLES ; F-06921 SOPHIA-ANTIPOLIS ; FRANCE,* 30 August 2017, vol. TC - LI, 1-605